# EUROPEAN PATENT APPLICATION

(11) **EP 1 759 935 A1**
(43) Date of publication of application: **07.03.2007**
(21) Application number: 06016668.3
(22) Date of filing: 09.08.2006
(51) Int. Cl.: B60R 21/215

(54) **Airbag device and covering member thereof**

(30) Priority: 02.09.2005 JP 2005255205
(71) Applicant: TAKATA CORPORATION, Minato-ku, Tokyo 106-8510 (JP)
(72) Inventor: Hayashi, Shinji, Minato-ku Tokyo 106-8510 (JP)
(74) Representative: Vossius & Partner

(57) **Abstract**

A covering member is provided which allows a back face in a backplate, the back face fixed to a door section of a cover body, to start opening very easily during opening of the door section, and to provide an airbag device including the covering member. The airbag device 1 includes a container 2 having an opening in the front thereof, a folded airbag 3 accommodated in the container 2, an inflator 4 for inflating the airbag 3, door sections 5d of an instrument panel 5 covering the front of the container 2, and a backplate unit 10. First backplates 11 of the backplate unit 10 are fixed to the door sections 5d, and a second backplate 12 is fixed to a peripheral section 5s. The first backplates 11 and the second backplate 12 are connected to each other by flexible components 14 formed of meshes (Fig. 1).

## Description

The present invention relates to airbag devices and covering members thereof that are disposed in fast moving bodies such as automobiles, and in particular, it relates to airbag devices and covering members thereof that are suitable for passenger airbag devices. Specifically, the present invention relates to covering members including door sections and airbag devices including the covering members.

A passenger airbag device is disposed in front of a front passenger seat, and includes a container having an opening in the front thereof, an airbag accommodated in the container, a gas generator for inflating the airbag, and a covering member that covers the front of the container. When the gas generator blows gas and the airbag is inflated, the covering member is opened by the airbag that pushes the covering member. Thus, the airbag is deployed in the vehicle cabin.

A covering member including an instrument panel serving as a plastic cover body and a plastic airbag bracket serving both as a backplate and a connecting member fixed to the back face of the instrument panel by vibration welding is disclosed in JP-A-2002-12116 (Patent Document 1). This airbag bracket is connected to an airbag case serving as a container.

According to JP-A-2002-12116, the airbag bracket includes a mounting section connected to the airbag case and a back-face section fixed to the back face of a door section of the instrument panel. The mounting section and the back-face section are integrated via a U-shaped hinge section, and composed of the same synthetic resin. The hinge section allows the door section to start opening smoothly.

An object of the present invention is to provide a covering member that allows a back face in a backplate, the back face fixed to a door section of a cover body, to start opening very easily during opening of the door section, and to provide an airbag device including the covering member.

A covering member for an airbag device according to a first invention (Claim 1) includes a cover body having a door section that is opened when an airbag is inflated, and a backplate integrated with the back face of the cover body. The covering member is characterized in that at least a hinge section in the backplate, the hinge section being bent when the door section is opened, is formed of a flexible component.

The covering member according to Claim 2, which is dependent on Claim 1, is characterized in that the backplate includes a first backplate integrated with the door section of the cover body and a second backplate separated from the first backplate and integrated with a peripheral section of the cover body enclosing the door section, and the first backplate and the second backplate are connected by the flexible component.

A covering member for an airbag device according to a second invention (Claim 3) includes a cover body having a door section that is opened when an airbag is inflated, and a backplate integrated with the back face of the cover body. The covering member is characterized in that the backplate is integrated with a peripheral section of the cover body; enclosing the door sectionand a flexible component extends along the back face of the door section, and is fixed to the backplate and the back face of the door section.

The covering member according to Claim 4, which is dependent on any one of Claims 1 to 3, is characterized in that the flexible component is a mesh, a sheet, or a metallic component.

The covering member according to Claim 5, which is dependent on any one of Claims 1 to 4, is characterized in that the cover body is a lid or an instrument panel.

An airbag device according to the present invention (Claim 6) includes a container having an opening in the front thereof, an airbag accommodated in the container, a gas generator for inflating the airbag, and a covering member that covers the front of the container. The airbag device is characterized in that the covering member is the covering member according to the present invention.

In the covering member of the airbag according to Claim 1 and an airbag device including the same, the hinge section of the backplate is composed of a flexible material, and thus the door section starts opening smoothly when the cover body is opened.

According to Claim 2, the first backplate fixed to the door section of the cover body and the second backplate fixed to the peripheral section of the cover body are separate components, and the backplates are connected to each other by the flexible component. Therefore, when the cover body is opened, the door section starts opening very smoothly without any or almost any flexing resistance from the first and second backplates.

According to Claim 3, the backplate is not fixed to the door section of the cover body, and only the flexible component is fixed to the door section of the covering body. Therefore, when the cover body is opened, the door section starts opening smoothly without flexing resistance from the backplate.

When the flexible component is formed of a mesh, a sheet, or a metallic component, the door section can start opening considerably more smoothly.

The cover body may be either a lid or an instrument panel.

Embodiments of the present invention will now be described with reference to the drawings:
Fig. 1 is a cross-sectional view of a passenger airbag device according to an embodiment; and
Fig. 2 is a cross-sectional view of a passenger airbag device according to another embodiment.

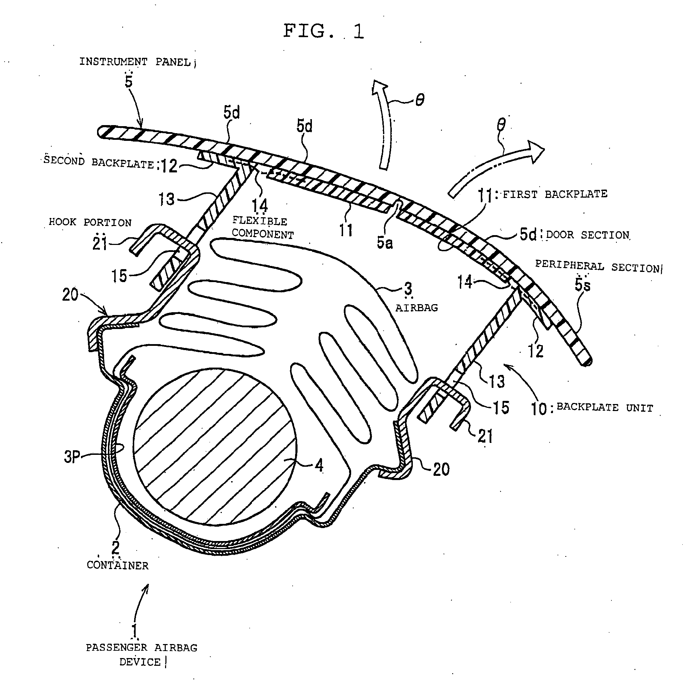

The right side in Fig. 1 is adjacent to the passenger, and the left side is adjacent to a windshield.
A passenger airbag device 1 includes a container 2 that is approximately rectangular when viewed in plan, a folded airbag 3 disposed inside the container 2, and an approximately columnar inflator 4 for inflating the airbag 3. The airbag 3 is connected to the bottom portion of the container 2 via an airbag retaining plate 3P extending along the bottom surface of the container 2.

An instrument panel 5 covers an opening adjacent to the top of the container 2, and a tear line 5a from which cleavage starts is formed on the back face of the instrument panel 5. Both sides of the tear line 5a are defined as door sections 5d that are opened when the airbag 3 is inflated.
A peripheral section 5s encloses the door sections 5d.

A backplate unit 10 is fixed to the back face of the instrument panel 5 by vibration welding or the like. The backplate unit 10 includes first backplates 11 fixed on the back face of the door sections 5d, a second backplate 12 fixed on the peripheral section 5s enclosing the door sections 5d, and a footboard 13 extending from the second backplate 12 so as to stand straight. The first backplates 11, the second backplate 12, and the footboard 13 are separate components, and gaps are provided between the first backplates 11 and the second backplate 12. The first backplates 11, the second backplate 12, and the footboard 13 are composed of synthetic resin.

Furthermore, the backplate unit 10 includes flexible components 14 that connect the first backplates 11 and the second backplate 12. The flexible components 14 are formed of meshes composed of plastic fibers or metal wires, plastic sheets, metal sheets, or the like. First ends of the flexible components 14 are fixed to the first backplates 11 by embedding or the like, and second ends of the flexible components 14 are fixed to the second backplate 12 by embedding or the like.

As shown in the drawing, base ends of the first backplates 11 are adjacent to the second backplate 12, and leading ends of the first backplates 11 extend to the vicinity of the edge of the tear line 5a.

The footboard 13 is a plate extending approximately perpendicular to the instrument panel 5. The footboard 13 includes openings 15 for attaching hook portions 21 of fixtures 20 (described below).

The fixtures 20 are fixed on edge portions of the container 2 adjacent to the windshield and adjacent to the passenger by welding or the like. The approximately L-shaped hook portions 21 are integrally formed at ends of the fixtures 20 adjacent to the instrument panel 5. The footboard 13 and the container 2 are connected by fitting the hook portions 21 into the openings 15 of the footboard 13.

In this airbag device 1 having the above-described structure, when the inflator 4 blows gas and the airbag 3 is inflated, the door sections 5d cleave along the tear line 5a such that the door sections 5d start opening outward in the directions of arrows θ. Thus, the airbag 3 expands in front of the passenger so as to restrain the passenger.

When the door sections 5d start opening, the first backplates 11 integrated with the door sections 5d start opening, and the flexible components 14 are bent. The flexible components 14 can be bent very easily, and do not apply resistance when the door sections 5d starts opening. Therefore, the door sections 5d can start opening very smoothly. Since the first backplates 11 and the second backplate 12 are connected via the flexible components 14, the door sections 5d are not blown off even when large stress is concentrated in the vicinity of connections between the peripheral section 5s and the door sections 5d.

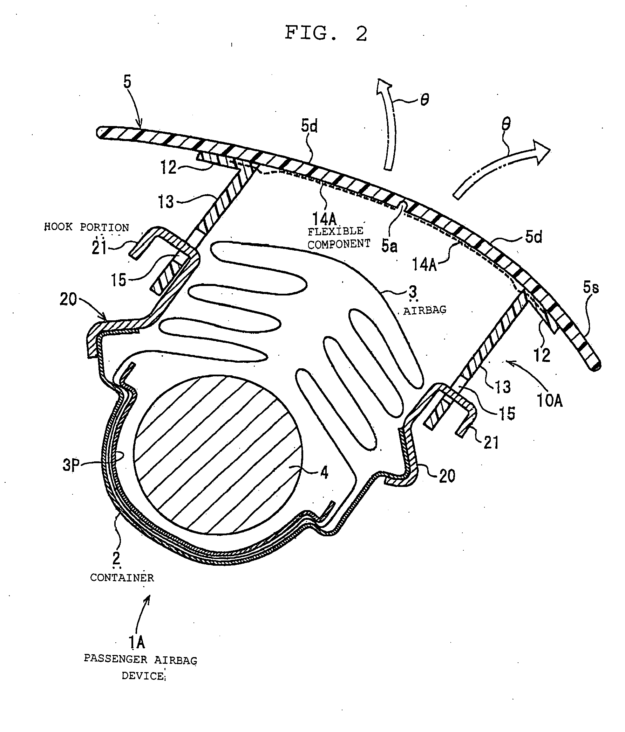

Fig. 2 is a cross-sectional view of an airbag device 1A according to another embodiment.

In this embodiment, a backplate unit 10A does not include first backplates 11, but includes only a second backplate 12 and footboard 13. The second backplate 12 is fixed to the back face of a peripheral section 5s of an instrument panel 5.

First ends of flexible components 14A are fixed to the second backplate 12 by embedding or the like. Second ends of the flexible components 14A extend along the back faces of door sections 5d, and are fixed on the back faces of the door sections 5d by bonding or the like.

As shown in the drawing, the first ends of the flexible components 14A are embedded in the second backplate 12 on the side of the peripheral section 5s adjacent to the passenger and adjacent to the windshield. The second ends of the flexible components 14A extend to the vicinity of a tear line 5a.

Structures other than these components are the same as in those shown in Fig. 1, and components having the same reference numerals or symbols correspond to the same components.

Also in this embodiment, when an inflator 4 blows gas, the door sections 5d are opened outward in the directions of arrows θ. At this time, the door sections 5d can start opening very smoothly since the flexible components 14 can easily be bent. Moreover, since the flexible components 14A are fixed to both the door sections 5d and the peripheral section 5s, the door sections 5d are not blown off.

The above-described embodiments are merely examples for carrying out the present invention, and embodiments other than those shown in the drawings are permissible within the scope of the present invention. For example, only one door section may be provided by forming the tear line 5a along the peripheral section 5s adjacent to the passenger. As a matter of course, three or more door sections that are opened in three or four directions may also be provided.

Moreover, the backplate unit is fixed to the instrument panel 5 in the above-described embodiments, but it may be fixed to a lid of the airbag device.

## Claims

1. A covering member for an airbag device, comprising:
a cover body having a door section that is opened when an airbag is inflated; and
a backplate integrated with the back face of the cover body, wherein
at least a hinge section in the backplate, the hinge section being bent when the door section is opened, is formed of a flexible component.

2. The covering member according to Claim 1, wherein
the backplate comprises a first backplate integrated with the door section of the cover body and a second backplate separated from the first backplate and integrated with a peripheral section of the cover body enclosing the door section; and
the first backplate and the second backplate are connected by the flexible component.

3. A covering member for an airbag device, comprising:
a cover body having a door section that is opened when an airbag is inflated; and
a backplate integrated with the back face of the cover body, wherein
the backplate is integrated with a peripheral section of the cover body enclosing the door section; and
a flexible component extends along the back face of the door section, and is fixed to the backplate and the back face of the door section.

4. The covering member according to any one of Claims 1 to 3, wherein the flexible component is a mesh, a sheet, or a metallic component.

5. The covering member according to any one of Claims 1 to 4, wherein the cover body is a lid or an instrument panel.

6. An airbag device comprising:
a container having an opening in the front thereof;
an airbag accommodated in the container;
a gas generator for inflating the airbag; and
a covering member that covers the front of the container, wherein
the covering member is the covering member according to any one of Claims 1 to 5.
